# EUROPÄISCHE PATENTSCHRIFT

(11) **EP 1 888 280 B1**
(45) Veröffentlichungstag und Bekanntmachung des Hinweises auf die Patenterteilung: **15.04.2009**
(21) Anmeldenummer: 06753877.7
(22) Anmeldetag: 25.05.2006
(51) Int. Cl.: B23B 31/26, B23B 31/107, B23B 29/04

(54) **VERBINDUNG ZWISCHEN ZWEI WERKZEUGTEILEN**
CONNECTION BETWEEN TWO TOOL PARTS
LIAISON ENTRE DEUX PARTIES D'OUTIL

(30) Priorität: 25.05.2005 DE 202005008389 U; 27.05.2005 DE 202005008461 U; 27.08.2005 DE 202005013572 U; 15.10.2005 DE 102005049615
(43) Veröffentlichungstag der Anmeldung: 20.02.2008
(73) Patentinhaber: MAPAL Fabrik für Präzisionswerkzeuge Dr. Kress KG, D-73431 Aalen (DE)
(72) Erfinder: REINAUER, Andreas, 72505 Krauchenwies (DE)
(74) Vertreter: Gleiss, Alf-Olav
(86) Internationale Anmeldenummer: PCT/EP2006/005010
(87) Internationale Veröffentlichungsnummer: WO 2006/125653

(56) Entgegenhaltungen:
- EP-A- 0 901 859
- DE-U1-0202004 009 50
- US-A- 3 622 169
- US-A1- 2001 006 280

## Beschreibung

Die Erfindung betrifft eine Verbindungsstelle mit zwei Werkzeugteilen gemäß Oberbegriff des Anspruchs 1 (siehe z.B. EP-0 901 859-A),

Verbindungsstellen der hier angesprochenen Art sind bekannt. Sie dienen dazu, zwei Werkzeugteile miteinander zu verbinden. Dabei kann die Verbindungsstelle unmittelbar an einer Werkzeugmaschine vorgesehen sein, sodass das eine Werkzeugteil durch die Aufnahmespindel der Werkzeugmaschine gebildet wird. Denkbar ist es aber auch, dass dieses Werkzeugteil durch ein Zwischenstück, einen Adapter oder ein Teilelement eines Werkzeugs gebildet wird. Das andere Werkzeugteil kann ein Werkzeughalter, ein Zwischenstück, ein Adapter oder dergleichen sein. Insgesamt zeigt sich, dass mit dem Begriff Werkzeugteil hier verschieden ausgebildete Elemente angesprochen werden, die im Bereich einer Verbindungsstelle miteinander verbunden werden. Es ist bekannt, dass die Werkzeugteile einer Verbindungsstelle miteinander verspannt werden. Dies erfolgt mittels einer Spannvorrichtung, die manuell oder maschinell, auch automatisch, betätigbar ist. Es hat sich herausgestellt, dass beim Verbinden zweier Werkzeugteile im Bereich einer Verbindungsstelle unmittelbar nach dem Zusammenfügen der Werkzeugteile die Gefahr besteht, dass vor dem Aktivieren der Spanneinrichtung die beiden Werkzeugteile wieder auseinander fallen. Dies kann zu Beschädigungen des Werkzeugs und/oder der Werkzeugmaschine aber auch zu Verletzungen einer Bedienungsperson führen. Insbesondere, wenn die beiden einer Verbindungsstelle zugeordneten Werkzeugteile manuell miteinander verspannt werden, ergibt sich häufig das Problem, dass die Bedienungsperson das eine Werkzeugteil mit beiden Händen in das andere Werkzeugteil der Verbindungsstelle einsetzen muss und dann Schwierigkeiten hat, eine manuelle Spanneinrichtung zu betätigen und sich dabei auch noch zu sichern beziehungsweise zu halten.

Aufgabe der Erfindung ist es daher, eine Verbindungsstelle mit zwei Werkzeugteilen zu schaffen, die eine Gefährdung der Bedienungsperson aber auch die Gefahr einer Beschädigung eines oder beider Werkzeugteile einer Verbindungsstelle vermeidet.

Zur Lösung dieser Aufgabe wir eine Verbindungsstelle vorgeschlagen, die die in Anspruch 1 genannten Merkmale aufweist.

Besonders bevorzugt wird ein Ausführungsbeispiel der Verbindungsstelle, das sich dadurch auszeichnet, dass die Haltevorrichtung beim Zusammenfügen der beiden Werkzeugteile im Bereich einer Verbindungsstelle selbsttätig aktiviert wird. Es bedarf also keiner zusätzlichen Handhabungsschritte, um die Haltevorrichtung zu aktivieren. Werden die beiden Werkzeugteile zusammengefügt, werden sie von der Haltevorrichtung quasi automatisch zusammengehalten, sodass die Bedienungsperson beide Hände frei hat, um sich einerseits zu sichern und andererseits die Spanneinrichtung zu betätigen.

Weitere Ausgestaltungen ergeben sich aus den Unteransprüchen.

Die Erfindung wird im Folgenden anhand der Zeichnung näher erläutert. Es zeigen:
- Figur 1: ein erstes Ausführungsbeispiel einer Verbindungsstelle im Längsschnitt;
- Figur 2: Teile einer Haltevorrichtung der Verbindungsstelle ge- mäß Figur 1 in Explosionsdarstellung;
- Figur 3: ein zweites Ausführungsbeispiel einer Verbindungsstel- le im Längsschnitt;
- Figur 4: einen vergrößerten Schnitt durch eine Haltevorrichtung der Verbindungsstelle gemäß Figur 3 und
- Figur 5: Teile der Haltevorrichtung gemäß Figur 3 und 4 in Exp- losionsdarstellung.

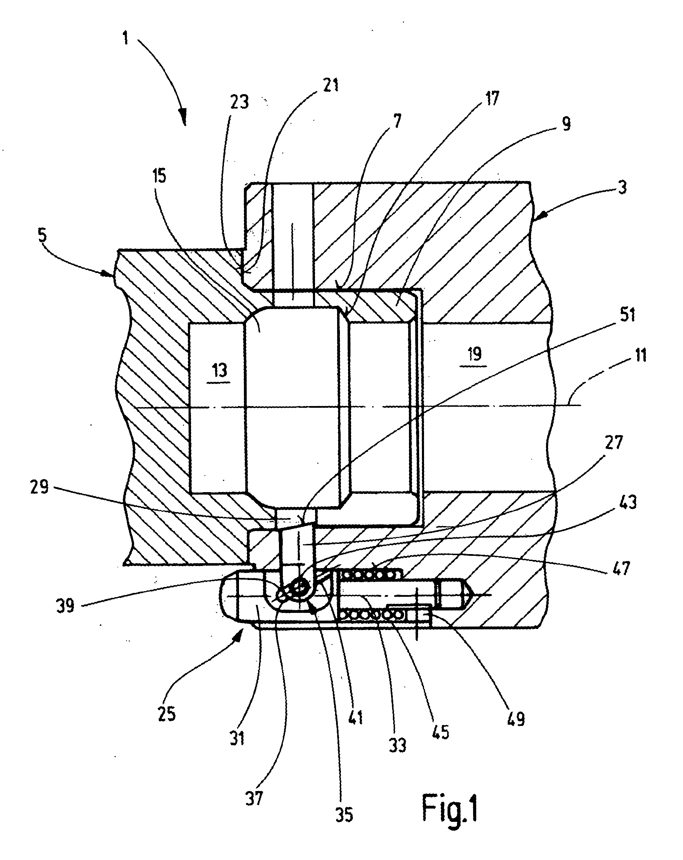

Figur 1 zeigt ein erstes Ausführungsbeispiel einer Verbindungsstelle 1 im Längsschnitt. Sie umfasst ein erstes Werkzeugteil 3, das hier abgebrochen dargestellt ist und eine Aufnahme bildet, in die ein zweites Werkzeugteil 5 bereichsweise eingesteckt ist. Dazu weist das erste Werkzeugteil eine Ausnehmung 7 auf, in die ein auch als Schaft 9 bezeichneter Abschnitt des zweiten Werkzeugteils 5 eingesteckt ist.

Die Ausnehmung 7 kann zylindrisch, polygonförmig oder aber konisch ausgebildet sein, wie dies in Figur 1 dargestellt ist. Sie erweitert sich in Richtung auf das zweite Werkzeugteil 5, dessen Schaft 9 entsprechend konisch ausgebildet ist. Wenn die beiden Werkzeugteile 3 und 5 der Verbindungsstelle 1 ineinander gesteckt sind, liegen sie konzentrisch zur Mittelachse 11 der Verbindungsstelle 1, die damit auch die Mittelachse des ersten Werkzeugteils 3 und des zweiten Werkzeugteils 5 bildet.

Der Schaft 9 des zweiten Werkzeugteils 5 ist bei dem hier dargestellten Ausführungsbeispiel hohl ausgebildet, wobei der Hohlraum 13 des Schafts 9 eine umlaufende Nut 15 mit einer Spannschulter 17 aufweist. In die Nut greifen hier nicht dargestellte Spannelemente ein, die im gespannten Zustand an der Spannschulter anliegen und das erste Werkzeugteil 3 mit dem zweiten Werkzeugteil 5 verspannen. Sie sind von außen durch senkrecht zur Mittelachse 11 verlaufende Öffnungen betätigbar, oder aber durch eine zentrale Öffnung 19 im ersten Werkzeugteil 3.

Aus dem hier dargestellten Ausführungsbeispiel ist ersichtlich, dass die beiden Werkzeugteile 3 und 5 im Bereich der Verbindungsstelle 1 aneinander liegen und vorzugsweise Ringflächen 21 und 23 aufweisen, die konzentrisch zur Mittelachse 11 angeordnet sind und in einer Ebene liegen, auf der die Mittelachse 11 senkrecht steht. Dabei ist die Ringfläche 21 dem ersten Werkzeugteil und die Ringfläche 23 dem zweiten Werkzeugteil 5 zugeordnet.

Diese Ausgestaltung der Verbindungsstelle 1 ist grundsätzlich bekannt, sodass hier nicht näher darauf eingegangen wird.

Die hier dargestellte Verbindungsstelle 1 zeichnet sich durch eine Haltevorrichtung 25 aus, die die beiden Werkzeugteile 3 und 5 der Verbindungsstelle 1 in zusammengestecktem Zustand zusammenhält, auch wenn die hier nicht dargestellte Spanneinrichtung noch nicht aktiviert wurde.

Dazu ist vorgesehen, dass die Haltevorrichtung mindestens ein Verriegelungselement 27 aufweist, das in einem der Werkzeugteile, hier im ersten Werkzeugteil 3, verschiebbar gelagert ist und in einer Funktionsstellung, nämlich der hier dargestellten Verriegelungsstellung, in das andere Werkzeugteil, hier also in das zweite Werkzeugteil 5, eingreift, wenn die Werkzeugteile 3 und 5 zusammengesteckt sind. Auf diese Weise werden also, wie oben gesagt, die beiden Werkzeugteile 3 und 5 nach dem Zusammenfügen zusammengehalten.

Bei dem hier dargestellten Ausführungsbeispiel ragt das Verriegelungselement 27 in der Verriegelungsstellung etwas in die Ausnehmung 7 hinein und greift in eine im anderen Werkzeugteil, also hier im zweiten Werkzeugteil 5, vorgesehene Ausnehmung 29 ein. Diese ist, in Richtung der Mittelachse 11 gesehen, so angeordnet, dass das Verriegelungselement 27 mit seiner in Figur 1 rechten Außenfläche an der rechten Innenfläche der Ausnehmung 29 anliegt, sodass das zweite Werkzeugteil 5 nicht aus dem ersten Werkzeugteil 3 herausfallen kann, nachdem die beiden Werkzeugteile 3 und 5 im Bereich der Verbindungsstelle 1 zusammengesteckt wurden.

Bei dem hier dargestellten Ausführungsbeispiel ist das zweite Werkzeugteil 5 so ausgebildet, dass die Ausnehmung 29 durch ein im Wesentlichen senkrecht zur Mittelachse 11 verlaufendes Loch gebildet wird, vorzugsweise eine Bohrung. Denkbar ist es aber auch, einzelne Vertiefungen in der Außenfläche des zweiten Werkzeugteils und damit Anlageflächen für das Verriegelungselement 27 am zweiten Werkzeugteil 5 vorzusehen oder eine umlaufende Nut in der Außenseite des Schafts 9, in die in zusammengesetztem Zustand der Werkzeugteile 3 und 5 das Verriegelungselement 27 eingreifen kann. In letzterem Fall ist die Drehposition der beiden Werkzeugteile 3 und 5 beim Zusammenfügen derselben irrelevant, weil das Verriegelungselement 27 stets in die Ringnut eingreifen kann. Wenn, wie hier dargestellt, in das zweite Werkzeugteil 5 eine als Bohrung ausgebildete Ausnehmung 29 eingebracht wird, bedarf es einer bestimmten Drehausrichtung der beiden Werkzeugteile 3 und 5 im Bereich der Verbindungsstelle 1 zueinander, um sicherzustellen, dass das Verriegelungselement 27 in die Ausnehmung 29 eingreifen kann.

Bei dem in Figur 1 dargestellten Ausführungsbeispiel wird das Verriegelungselement 27 in einer im Wesentlichen senkrecht zur Mittelachse 11 verlaufenden Bohrung geführt. Es ist sehr wohl denkbar, dass diese Bohrung auch unter einem Winkel zur Mittelachse 11 verläuft. Entscheidend ist, dass das Verrieglungselement 27 in seiner Verriegelungsstellung in einer Ausnehmung 29 eingreift und damit das zweite Werkzeugteil 5 in einer vorgegebenen Position, in Richtung der Mittelachse 11 gesehen, hält.

Bei dem hier dargestellten Ausführungsbeispiel ist die Haltevorrichtung 25 im vorderen Bereich des ersten Werkzeugteils 3 angeordnet, also nahe zur Ringfläche 21. Das Verriegelungselement 27 greift damit in die Ausnehmung 7 ein und kann das zweite Werkzeugteil 5 im Bereich seines Schafts 9 erfassen. Das Verriegelungselement 27 liegt damit im Inneren der Verbindungsstelle 1 und ist auf diese Wiese vor Verschmutzungen geschützt.

Das Verriegelungselement 27 wirkt mit einem Betätigungselement 31 der Haltevorrichtung 25 zusammen. Dieses ist in dem Werkzeugteil verschieblich gelagert, in dem das Verriegelungselement 27 vorgesehen ist, hier also im ersten Werkzeugteil 3. Bei dem hier dargestellten Ausführungsbeispiel verläuft die Mittelachse 33, damit auch der Verlagerungsweg des Betätigungselements 31, im Wesentlichen parallel zur Mittelachse 11 der Verbindungsstelle 1 und damit des ersten Werkzeugteils 3.

Das Betätigungselement 31 ist mit dem Verriegelungselement 27 so gekoppelt, dass es bei einer Verlagerung in Richtung seiner Mittelachse 33 Zug- oder Druckkräfte auf das Verriegelungselement 27 ausübt, sodass dieses bei Druckkräften in Richtung auf die Mittelachse 11 beweget wird und bei Zugkräften in entgegengesetzter Richtung.

Die Umsetzung der Bewegung des Betätigungselements 31 in eine Verlagerung des Verriegelungselements 27 erfolgt durch eine Kopplungseinrichtung 35. Bei dem hier dargestellten Ausführungsbeispiel weist das Betätigungselement 31 einen Schlitz 37 auf, der unter einem spitzen Winkel zu der Mittelachse 33 des Betätigungselements 31 verläuft und damit zwei Anlageflächen, nämlich eine obere Anlagefläche 39 und eine untere Anlagefläche 41. Diese verlaufen ebenfalls unter einem spitzen Winkel zur Mittelachse 33 des Betätigungselements 31, damit also auch zu dessen Bewegungsrichtung. Vorzugsweise sind die beiden Anlageflächen 39 und 41 im Wesentlichen parallel zueinander angeordnet, wie dies hier dargestellt ist.

In den Schlitz 37 greift ein senkrecht zur Bildebene von Figur 1 verlaufender Stift 43 ein, dessen Durchmesser an die Breite des Schlitzes 37 angepasst ist, sodass er mit der oberen Anlagefläche 39 und der unteren Anlagefläche 41 in Berührung treten kann. Vorzugsweise ist der Durchmesser des Stifts 43 so gewählt, dass dieser mehr oder weniger spielfrei im Schlitz 37 geführt wird. Der Stift 43 ist fest mit dem Verrieglungselement 27 gekoppelt.

Das Betätigungselement 31 wird mit einer Vorspannkraft beaufschlagt, die dieses in dessen erste Funktionsstellung drängt, nämlich nach links. Die Vorspannkraft wird durch ein Federelement 45 aufgebaut, das hier als Schraubenfeder ausgelegt ist. Diese umgibt einen stiftförmig verjüngten Bereich 46 des Betätigungselements 31 und stützt sich einerseits an diesem ab, andererseits am Grund einer Bohrung 47, die das Betätigungselement 31 und das Federelement 45 aufnimmt.

Der Bewegungsweg des Betätigungselements 31 wird begrenzt durch einen Anschlag, sodass dieses nicht nach links aus der Bohrung 47 herausgleiten kann. Dieser Anschlag wird hier durch eine Schraube 49 realisiert, die in eine in Richtung der Mittelachse 33 verlaufende Nut in der Außenfläche des stiftförmig verjüngten Bereichs 46 eingreift.

Durch die Kopplungseinrichtung 35 wird die Vorspannkraft, die auf das Betätigungselement 31 ausgeübt wird, auf das Verrieglungselement 27 übertragen: Durch das Federelement 45 wird das Betätigungselement 31 bis zum Anschlag nach links bewegt. Die untere Anlagefläche 41, an der der Stift 43 anliegt, drängt diesen dadurch nach oben, sodass das Verriegelungselement 27 damit in seine Verriegelungsstellung verlagert wird, in der es der Mittelachse 11 am nächsten liegt.

Durch das Federelement 45 wird also über die Kopplungseinrichtung 35 eine Druckkraft auf das Verriegelungselement 27 ausgeübt, die dieses in die Ausnehmung 29 im zweiten Werkzeugteil 5 drängt.

Das Verriegelungselement weist an seinem der Mittelachse 11 zugewandten Ende eine Anlaufschräge 51 auf, die in Figur 1 von links nach rechts in Richtung auf die Mittelachse 11 ansteigt. Wird also das zweite Werkzeugteil 5 in das erste Werkzeugteil 3 eingeschoben, so kann der Schaft 9 das Verrieglungselement 27 gegen die Vorspannkraft des Federelements 45 zurückdrängen. Ist das zweite Werkzeugteil 5 weit genug in das erste Werkzeugteil 3 eingeschoben, schnappt das Verriegelungselement 27 aufgrund der Federkraft in die Ausnehmung 29 ein.

Wird beim Einschieben des zweiten Werkzeugteils 5 von oben eine Kraft auf das Verriegelungselement 27 ausgeübt, sodass dieses von der Mittelachse 11 weg nach unten gedrängt wird, so drückt der Stift 43 auf die untere Anlagefläche 41 des Schlitzes 37, sodass das Betätigungselement 31 gegen die Vorspannkraft des Federelements 45 -in Figur 1- nach rechts verlagert wird.

Sollen die beiden Werkzeugteile 3 und 5 der Verbindungsstelle 1 voneinander getrennt werden, so wird auf das von außen zugängliche Betätigungselement 31 eine von links nach rechts wirkende Druckkraft ausgeübt, sodass dieses gegen die Vorspannkraft des Federelements 45 nach rechts verlagert wird. In diesem Fall wirkt die obere Anlagefläche 39 auf den senkrecht zur Bildebene im Schlitz 37 verlaufenden Stift 43. Da der Schlitz 37 von links nach rechts ansteigt, drückt damit die obere Anlagefläche 39 bei dieser Verlagerungsrichtung des Betätigungselements 31 den Stift 43 nach unten, sodass das Verriegelungselement 27 ebenfalls nach unten gezogen wird und aus der Ausnehmung 29 im zweiten Werkzeugteil 5 heraustritt. Damit sind die Werkzeugteile 3 und 5 der Verbindungsstelle 1 entriegelt.

Die Anlageflächen 39 und 41 des Schlitzes 37 wirken also bei einer Verlagerung des Betätigungselements 31 nach rechts und links in Richtung der Mittelachse 33 so auf den Stift 43, dass das mit diesem gekoppelte Verriegelungselement 29 mit Zug- beziehungsweise Druckkräften beaufschlagt wird.

Durch die Kopplungseinrichtung 35 reicht es, wenn, wie hier dargestellt, auf das Betätigungselement 31 eine Vorspannkraft ausgeübt wird, die dieses in eine bestimmte Funktionsstellung drängt. Die Vorspannkraft wird auf das Verriegelungselement 27 übertragen. Denkbar ist es aber auch, eine Vorspannkraft unmittelbar auf das Verriegelungselement 27 auszuüben, die dann über die Kopplungseinrichtung 35 auch auf das Betätigungselement 31 wirkt. Es zeigt sich αber, dass die hier dargestellte Realisierung eine relativ kleine, kompakte Bauform der Verbindungsstelle 1 ermöglicht. In axialer Richtung gesehen, also in Richtung der Mittelachse 11 ist im ersten Werkzeugteil 3 ausreichend Platz, um in der Bohrung 47 das Betätigungselement 31 und das Federelement 45 unterzubringen. In senkrechter Richtung zur Mittelachse 11 bedarf es nur eines relativ kleinen Bauraums, um das Verrieglungselement 27 unterzubringen.

Anhand den Erläuterungen von Figur 1 wurde davon ausgegangen, dass die Haltevorrichtung 35 nahe der Ringfläche 21 des ersten Werkzeugteils 3 vorgesehen ist. Sollte der Schaft 9 des zweiten Werkzeugteils 5 länger als in Figur 1 dargestellt ausgebildet sein oder aber, was bei bekannten Werkzeugen bekannt ist, mit einer Verlängerung ausgestattet sein, so könnte die Haltevorrichtung auch in einem Abstand zur Ringfläche 21 angeordnet sein und auf das hintere Ende des Schafts 9 oder aber auf eine mit diesem verbundene Verlängerung einwirken.

Im übrigen sei noch darauf hingewiesen, dass über den Umfang der Verbindungsstelle 1 auch mehr als eine der hier beschriebenen Haltevorrichtungen 35 vorgesehen werden können, insbesondere bei sehr großen und schweren Werkzeugen.

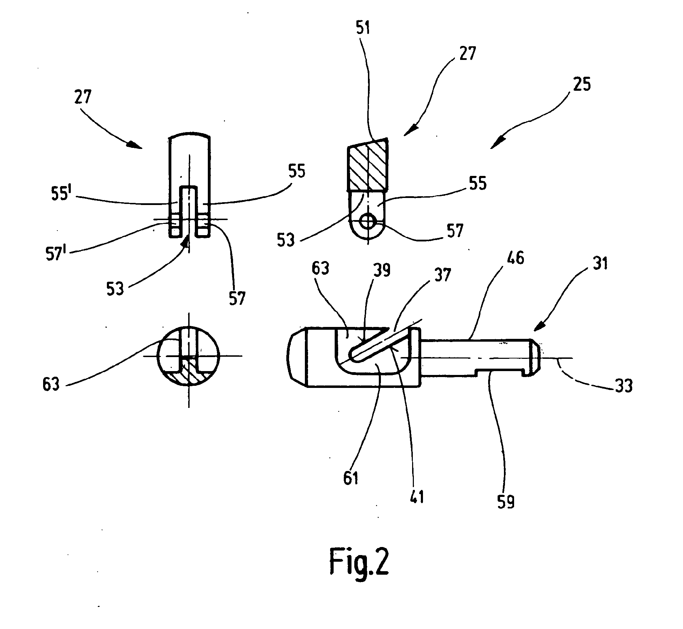

Figur 2 zeigt Teile der Haltevorrichtung 25 in Explosionsdarstellung. Gleiche Teile sind mit gleichen Bezugsziffern versehen, sodass insofern auf die vorangegangene Beschreibung verwiesen wird.

Oben rechts in Figur 2 ist das Verriegelungselement 27 in der Position dargestellt, in der es auch in Figur 1 wiedergegeben ist. Deutlich erkennbar ist die Anlaufschräge 51.

In dem der Anlaufschräge 51 gegenüberliegenden Endbereich des Verrieglungselements 27 ist ein Schlitz 53 eingebracht, sodass zwei in einem Abstand zueinanderliegende Verbindungsarme 55, 55' gebildet werden, von denen oben rechts in Figur 2 der Verbindungsarm 55 dargestellt ist. Oben links in Figur 2 ist das Verriegelungselement 27 um 90° gedreht dargestellt, daher sind hier der Schlitz 53 und der andere Verbindungsarm 55' ersichtlich.

In dem der Anlaufschräge 51 abgewandten Endbereich der Verbindungsarme 55, 55' ist jeweils ein Loch 57 beziehungsweise 57' vorgesehen, in das der anhand von Figur 1 erläuterte, hier nicht wiedergegebene Stift 43 eingesetzt wird. Dieser kann hier auf beliebige Weise befestigt werden.

Unten in Figur 2 ist rechts das Betätigungselement 31 in Seitenansicht dargestellt. Es ist also hier so angeordnet, wie es aus Figur 1 ersichtlich ist. Es weist einen stiftförmigen Bereich 46 mit einer in Richtung der Mittelachse 33 des Betätigungselements 31 verlaufenden Nut 59 auf, in die die anhand von Figur 1 erläuterte Schraube 49 eingreift. Diese behindert die Bewegung des Betätigungselements 31 grundsätzlich nicht: Das Betätigungselement 31 ist frei in der Bohrung 47 hin- und her bewegbar. Allerdings ist der Bewegungsweg begrenzt, indem die in Figur 2 rechte Flanke der Nut 59 an der Schraube 49 anschlägt, sodass das Betätigungselement 31 in Figur 1 nicht beliebig weit nach links verlagert werden kann.

Der Schlitz 37 im Betätigungselement 31 ist in Figur 2 rechts unten deutlich erkennbar. Er ist in einen Bereich 61 eingebracht, in dem das Betätigungselement 31 dünner ausgebildet ist. Es kann hier beispielsweise ein Wandbereich 63 vorgesehen werden, der senkrecht auf der Mittelachse 33 steht und der so dünn ausgebildet ist, dass er in den Schlitz 53 im Verriegelungselement 27 eingreifen kann. Die Verbindungsarme 55 und 55' des Verriegelungselements 27 liegen also in zusammengebauten Zustand auf gegenüberliegenden Seiten des Wandbereichs 63.

In Figur 2 ist deutlich erkennbar, dass der Schlitz 37 eine obere Anlagefläche 39 und eine untere Anlagefläche 41 aufweist, die im Wesentlichen parallel zueinander und unter einem spitzen Winkel zur Mittelachse 33 und damit zum Bewegungsweg des Betätigungselement 31 verlaufen.

Unten links in Figur 2 ist ein Querschnitt durch das Betätigungselement 31 wiedergegeben, der durch den Bereich 61 geführt ist. Deutlich erkennbar ist hier der Wandbereich 63, der in den Schlitz 53 des oben links in Figur dargestellten Verriegelungselements 27 eingreifen kann. Die Dicke des Wandbereichs 63 ist dabei so gewählt, dass eine möglichst reibungsarme Relativbewegung zwischen Verriegelungselement 23 und Betätigungselement 31 erfolgen kann: Das Betätigungselement 31 bewegt sich, wie anhand von Figur 1 erläutert, in Richtung der Mittelachse 33 hin und her, während das Verriegelungselement 27 aufgrund der Kopplungseinrichtung 35 eine Bewegung senkerecht zur Mittelachse 33 beziehungsweise zur Mittelachse 11 der Verbindungsstelle 1 durchführt. Es wird aus dem Zusammenspiel der Teile der Kopplungseinrichtung 35 deutlich, dass das Verriegelungselement 27 nicht nur senkrecht zur Mittelachse 11 sondern auch unter einem Winkel dazu angeordnet sein kann. Durch den Stift 43 im Schlitz 37 wird bei einer Bewegung des Betätigungselements 31 in Richtung der Mittelachse stets eine Verlagerung des Verriegelungselements 27 relativ zur Mittelachse 11 bewirkt.

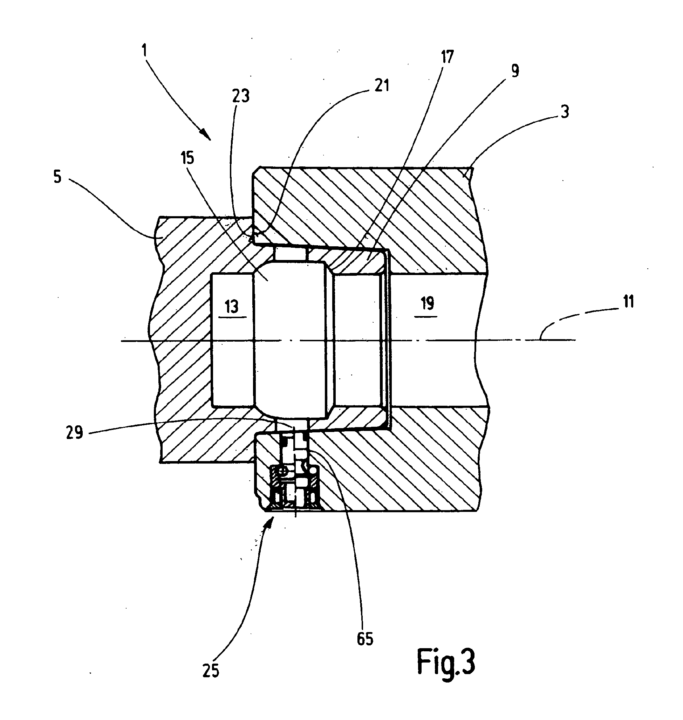

Figur 3 zeigt ein zweites Ausführungsbeispiel der Verbindungsstelle 1 mit einem ersten Werkzeugteil 3 und einem zweiten Werkzeugteil 5. Gleiche Teile sind mit gleichen Bezugsziffern versehen, sodass insofern auf die Beschreibung zu Figur 1 verwiesen wird, um Wiederholungen zu vermeiden.

Der Unterschied der beiden Ausführungsbeispiele gemäß den Figuren 1 und 3 besteht darin, dass hier in Figur 3 eine abgewandelte Haltevorrichtung 25 im Teilschnitt dargestellt ist. Diese ist symmetrisch aufgebaut. Rechts von einer Symmetrielinie 65 ist die Haltevorrichtung 25 in verriegeltem und links davon in entriegeltem Zustand wiedergegeben.

Auch bei diesem Ausführungsbeispiel ist es möglich, je nach Größe und/oder Gewicht der Werkzeugteile eine oder mehrere Haltvorrichtungen 25 vorzusehen.

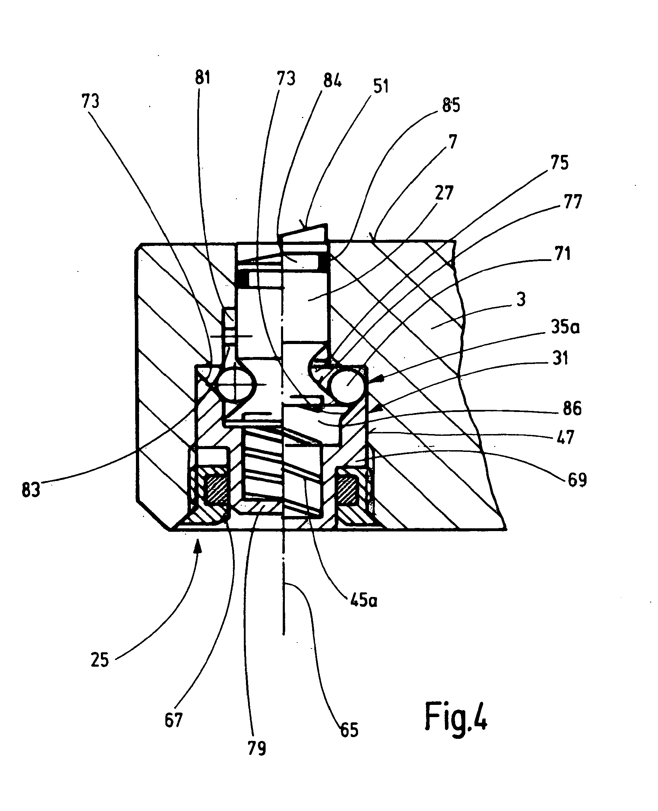

Auf die Haltevorrichtung 25 wird anhand von Figur 4 näher eingegangen, die diese stark vergrößert wiedergibt. Im Folgenden wird auf die Darstellung rechts der Symmetrielinie 65 eingegangen, die die Haltevorrichtung 25 in verriegeltem Zustand zeigt.

Die Haltevorrichtung 25 weist ein Verriegelungselement 27 mit einer Anlaufschräge 51 auf, die hier über die Innenfläche der Ausnehmung 7 des ersten Werkzeugteils 3 hinausragt. Damit greift das Verriegelungselement 27 in ein hier nicht dargestelltes zweites Werkzeugteil 5 der Verbindungsstelle 1 ein, wie dies anhand von Figur 1 erläutert wurde.

Das Verriegelungselement 27 ist, wie beim ersten Ausführungsbeispiel, senkrecht zu einer hier nicht dargestellten Mittelachse 11 der Verbindungsstelle 1 hin- und her verlagerbar, in Figur 4 also auf- und abwärts. Es kann auch unter einem Winkel zur Mittelachse 11 verlaufen.

Die Haltevorrichtung 25 weist ein Betätigungselement 31 auf, das, anders als beim ersten Ausführungsbeispiel, ebenfalls senkrecht oder unter einem Winkel zu einer hier nicht dargestellten Mittelachse 11 der Verbindungsstelle 1 verlagerbar ist, bei der Darstellung gemäß Figur 4 also nach oben und unten. Rechts von der Symmetrielinie 65 ist das Betätigungselement 31 in einer unteren, ersten Funktionsstellung, in der das erste Verriegelungselement 27 aufgrund einer durch ein Federelement 45a ausgeübten Vorspannkraft in seiner ersten maximal nach oben verlagerten Position angeordnet ist. In dieser Funktionsstellung liegt das Betätigungselement 31 an einem Anschlag 67 an, sodass es nicht nach unten aus einer Bohrung 47 im ersten Werkzeugteil 3 herausfallen oder herausgedrückt werden kann, in der das Betätigungselement 31 und das Verrieglungselement 27 gemeinsam mit dem Federelement 45a untergebracht sind.

Der Anschlag 67 ist hier durch eine Ringschraube realisiert, die mit einem Außengewinde in ein Innengewinde eingreift, das auf der Innenfläche der Bohrung 47 vorgesehen ist. Der Anschlag kann also gegenüber der Symmetrielinie 65 nach oben in Richtung auf die Mittelachse 11 der Verbindungsstelle 1 verlagert werden oder aber in entgegengesetzter Richtung.

Das Betätigungselement 31 weist einen im Wesentlichen zylindrischen Grundkörper 69 auf, der hohl ausgebildet ist, sodass er das Federelement 45a aufnehmen kann. Der Boden des Grundkörpers bildet eine Auflagefläche für das Federelement 45a, das auch hier als Schraubenfeder ausgebildet ist und sich andererseits an der Unterseite des Verrieglungselements 27 abstützt, also an dem der Anlaufschräge 51 gegenüberliegenden Ende des Verriegelungselements 27. Dadurch wird also das Verriegelungselement 27 nach oben in seine rechts der Symmetrielinie 65 dargestellte Verriegelungsstellung gedrängt.

Aus Figur 4 ist eine Kopplungseinrichtung 35a ersichtlich, die dazu dient, eine Bewegung des Betätigungselements 31 nach oben in Richtung der Symmetrielinie 65 in Zugkräfte umzusetzen, die das Verriegelungselement 27 entgegen der Vorspannkraft des Federelements 45a nach unten ziehen.

Druckkräfte, die auf das Verriegelungselement 27 nach oben wirken, werden also ausschließlich durch das Federelement 45a ausgeübt. Das Betätigungselement 31 übt bei einer Aufwärtsbewegung hier also ausschließlich über die Kopplungseinrichtung 35 Zugkräfte auf das Verriegelungselement 27 aus, während bei dem ersten Ausführungsbeispiel das Betätigungselement 31 Zug- und Druckkräfte über die Kopplungseinrichtung 35 aufbauen kann.

Die Kopplungseinrichtung 35a weist mindestens eine Kugel 71 auf. Hier sind über die Umfangsfläche der Bohrung 47 eine Anzahl von Kugeln vorgesehen. Vorzugsweise sind mindestens drei derartiger Kugeln vorhanden, die in gleichem Umfangsabstand gehalten werden, um eine gleichmäßige Kraftentwicklung auf das Verriegelungselement 27 zu realisieren. Besonders bevorzugt wird jedoch eine Kopplungseinrichtung 35a, die eine Vielzahl von Kugeln 71 aufweist.

Das Betätigungselement 31 weist an seinem oberen Rand eine Betätigungsfläche 73 auf, die von der Symmetrielinie 65 aus gesehen sich konisch nach oben erweitert. An dieser liegt die mindestens eine Kugel 71 an.

Das Verriegelungselement 27 weist eine Ausnehmung 75 auf, die im unteren, der Anlaufschräge 51 abgewandten Endbereich des Verriegelungselements 27 in dessen Umfangfläche eingebracht ist und ihrerseits eine Betätigungsfläche 77 aufweist, die entgegengesetzt zur Betätigungsfläche 73 verläuft und sich vom unteren Ende des Verriegelungselements 27 nach oben verjüngt, also konisch in Richtung auf die Symmetrielinie 65 zuläuft.

Zur Funktionsweise der Kopplungseinrichtung 35a ist Folgendes festzuhalten:

Wird das Betätigungselement 31 gegen die Kraft des Federelements 45 in Richtung der Symmetrielinie 65 nach oben bewegt, was links von der Symmetrielinie 65 dargestellt ist, so drängt die Betätigungsfläche 73 des Betätigungselements 31 die Kugel 71 nach innen in Richtung auf die Symmetrielinie 65, die auch die Mittelachse der Bohrung 47 darstellt. Es wird also quasi ein Keilgetriebe zwischen der Betätigungsfläche 37 und der mindestens einen Kugel 71 ausgebildet.

Die nach innen gerichteten Kräfte der Kugel 71 wirken auf die Betätigungsfläche 77 des Verriegelungselements 27 derart, dass bei einer Einwärtsbewegung der mindestens einen Kugel 71 Zugkräfte auf das Verriegelungselement 27 ausgeübt werden, die diese in Richtung der Symmetrielinie 65 nach unten, also von der Mittelinie 11 weg, bewegen.

Aus Figur 4 ist links von der Symmetrielinie 65 ersichtlich, dass aufgrund der Aufwärtsbewegung des Betätigungselements 31 und der Wirkung der Kopplungseinrichtung 35a eine Abwärtsbewegung des Verriegelungselements 27 erfolgt.

Bei dem hier dargestellten Ausführungsbeispiel weist das Betätigungselement 31 einen zylindrischen Ansatz 79 auf, der durch den freien Innenraum des als Ringschraube ausgebildeten Ansatzes 67 ragt und damit für einen Benutzer von außen zugänglich ist. Dieser kann also, wie hier beschrieben, das Betätigungselement 31 gegen die Kraft des Federelements 45a nach oben drücken, was links von der Symmetrielinie 65 in Figur 4 dargestellt ist.

Das anhand von Figur 1 erläuterte Verriegelungselement 27 umgreift mit seinen beiden Verbindungsarmen 55 und 55' den Wandbereich 63 des Betätigungselements 31. Diese Ausgestaltung stellte eine Verdrehsicherung des Verriegelungselements 27 dar. Damit ist gewährleistet, dass die Anlaufschräge 51 stets so ausgerichtet ist, dass das Verriegelungselement 27 beim Einführen eines zweiten Werkzeugteils 5 in das erste Werkzeugteil 3 gegen die Vorspannkraft zurückgedrängt werden kann.

Bei dem in Figur 3 und 4 dargestellten Ausführungsbeispiel der Haltevorrichtung 25 ist ebenfalls auf geeignete Weise sichergestellt, dass das Verriegelungselement 27 sich nicht verdreht und die Anlaufschräge 51 in gewünschter Weise ausgerichtet bleibt. Eine Verdrehsicherung könnte beispielsweise durch eine polygonförmige Ausgestaltung des Verriegelungselements 27 erzielt werden. Entsprechend müsste dann aber auch eine polygonförmige Führung in diesem Bereich der Bohrung 47 realisiert werden. Bei dem hier dargestellten Ausführungsbeispiel ist vorgesehen, dass auf der Innenseite der Bohrung 47 eine Nut 81 eingebracht ist, in die ein beispielsweise durch einen Stift oder eine Schraube realisierter Vorsprung 83 eingreift, der von der Außenwand des Verriegelungselements 27 vorspringt.

In dem Berührungsbereich zwischen Verriegelungselement 27 und dem ersten Werkzeugteil 3 ist vorzugsweise eine geeignete Führung und/oder Dichtung vorgesehen, beispielsweise eine in eine Nut 85 des Verriegelungselements 27 eingesetzte Dichtung 85, die vorzugsweise als O-Ring ausgebildet ist.

Eine entsprechende Einrichtung, also ein O-Ring oder dergleichen, ist vorzugsweise im Berührungsbereich zwischen dem zylindrischen Ansatz 79 des Betätigungselements 31 und der Innenseite des Anschlags 67 vorgesehen.

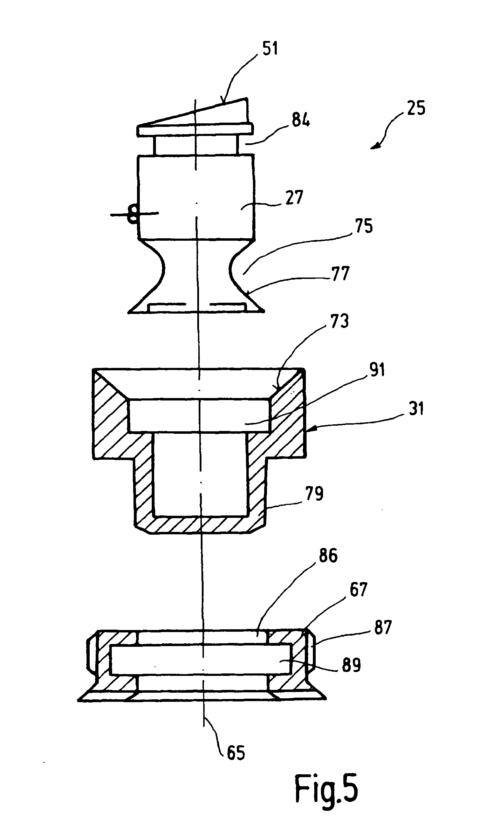

Figur 5 zeigt Teile der Haltevorrichtung 25, wie sie in Figur 4 dargestellt wurde, in Explosionsdarstellung. Unten ist der ringförmige Anschlag 67 zu sehen, der einen freien Innenraum 86, ein Außengewinde 87 und eine umlaufende Nut 89 in der Innenwand des Innenraums 86 zur Aufnahme einer hier nicht dargestellten Dichtung aufweist.

Konzentrisch zu der mit der Symmetrielinie 65 zusammenfallenden Mittelachse der Haltevorrichtung 25 liegt oberhalb des Anschlags 67 das Betätigungselement 31, dessen zylindrischer Ansatz 79 so ausgebildet ist, dass er in den Innenraum 86 möglichst reibungsarm eingreift.

Oben am Betätigungselement 31 ist dessen sich konisch nach oben öffnende Betätigungsfläche 73 erkennbar, die mit der hier nicht dargestellten mindestens einen Kugel 71 der Kopplungseinrichtung 35a zusammenwirkt, die in Figur 4 erläutert wurde.

Konzentrisch zum Betätigungselement 31 liegt das Verriegelungselement 27, das bereichsweise in den Innenraum 91 des hier kappenförmig ausgebildetes Betätigungselements 31 eingreifen kann, damit eine Relativbewegung in Richtung der Symmetrielinie 65 zwischen dem Verriegelungselement 27 und dem Betätigungselement 31 möglich ist.

Oben in Figur 5 ist deutlich erkennbar, dass in die Umfangsfläche des Verrieglungselements 27 eine Ausnehmung 75 eingebracht ist, die eine Betätigungsfläche 77 aufweist. Diese verjüngt sich nach oben konisch in Richtung zur Symmetrielinie 65.

Oben am Verrieglungselement 27 ist die Anlaufschräge 51 erkennbar. Auch ist die Nut 84 deutlich sichtbar.

Aus den Erläuterungen zu den Figuren 3 bis 5 wird deutlich, dass die Haltevorrichtung 25 auch hier selbsttätig wirkt: Werden zwei Werkzeugteile 3 und 5 im Bereich einer Verbindungsstelle 1 ineinandergefügt, so wird das Verriegelungselement 27 zunächst zurückgedrängt, dann aber aufgrund einer Vorspannkraft, die durch ein Federelement 45a ausgeübt wird, in eine Funktionsstellung gedrängt, die als Verriegelungsstellung bezeichnet wurde. Das Verrieglungselement 27 greift in dieser Stellung in eine Ausnehmung 29 im zweiten Werkzeugteil 5 ein, die als Bohrung, als Ringnut oder eben, wie oben beschrieben, als beliebige Vertiefung in der Außenfläche eines Teils des zweiten Werkzeugteils 5 realisiert sein kann.

Die beiden Werkzeugteile 3 und 5 der Verbindungsstelle 1 werden also durch die Haltevorrichtung 25 aneinander gehalten, auch ohne eine Spanneinrichtung zu betätigen, die zum endgültigen Verbinden der beiden Werkzeugteile 3 und 5 aktiviert wird, sei es manuell oder aber maschinell, insbesondere automatisch.

Eine Bedienungsperson kann also die beiden Werkzeugteile manuell zusammenfügen und aufgrund der selbsttätigen Wirkung der Haltevorrichtung 25 müssen die beiden zusammengefügten Werkzeugteile dann nicht mehr gehalten werden. Die Bedienungsperson hat also beide Hände frei, die Spannvorrichtung zu betätigen und sich selbst zu sichern, also bei den Arbeiten festzuhalten.

Die beiden Ausführungsbeispiele zeigen, dass das Verrieglungselement 27 senkrecht zur Mittelachse 11 aber auch unter einem Winkel dazu verlagert werden kann, und dass ein Betätigungselement 31, das über eine Kopplungseinrichtung 35, 35a mit dem Verriegelungselement 27 zusammenwirkt, im Wesentlichen parallel zur Mittelachse 11 oder senkrecht dazu verlagert werden kann, um eine Zug- und/oder Druckkraft auf das Verriegelungselement 27 auszuüben.

Die Haltevorrichtung 25 ist in beiden Fällen sehr einfach aufgebraut und damit störunanfällig. Sie ist auch einfach handhabbar. Eine Manuelle Verriegelung entfällt, da die Haltevorrichtung 25 selbsttätig wirkt. Es ist lediglich erforderlich, zur Entriegelung der Haltevorrichtung 25 eine Druckkraft auf das Betätigungselement 31 auszuüben. In diesem Fall ist die Spannvorrichtung bereits gelöst, sodass die Bedienungsperson ohnehin die Werkzeugteile 2 und 5 anfassen und entriegeln kann, indem dabei eine Druckkraft auf das Betätigungselement 31 ausgeübt wird.

Aus den Erläuterungen wurde deutlich, dass die Haltevorrichtung 25 in Zusammenhang mit Verbindungsstellen 1 unterschiedlichster Art vorgesehen werden kann. Insbesondere spielt es keine Rolle, ob der Schaft 9 des zweiten Werkzeugteils und die entsprechende Ausnehmung 7 im ersten Werkzeugteil 3 zylindrisch, polygonförmig und/oder konisch ausgebildet ist.

Es ist im übrigen möglich, je nach Länge des Schafts 9, die Haltevorrichtung in einem mehr oder weniger großen Abstand zur Vorderseite des ersten Werkzeugteils 3, also zu dessen Ringfläche 21, anzuordnen. Die Ausgestaltung der Verbindungsstelle 1 kann also in einem weiten Rahmen variiert werden.

Dabei ist es auch möglich, die hier beschriebene Haltevorrichtung mit einem oder mehreren über die Umfangsfläche der Verbindungsstelle 1 verteilten Verriegelungselementen 27 auszugestalten oder aber eben mehrere Haltevorrichtungen 25 vorzusehen.

Dabei ist es grundsätzlich möglich, die Ausführungsbeispiele, wie sie anhand der Figuren erläutert wurde, miteinander zu kombinieren.

Die hier beschriebene Verbindungsstelle 1 ist sehr störungsunanfällig, weil eine einfache Kopplung zwischen Verriegelungselement 27 und Betätigungselement 31 über die hier beschriebene Kopplungseinrichtung 35 beziehungsweise 35a möglich ist und auf einfache Weise Zug- und/oder Druckkräfte auf das Verriegelungselement 27 ausgeübt werden können.

Der in Zusammenhang mit Figur 3, 4 und 5 beschriebene Anschlag 67 kann sehr wohl auch bei dem Ausführungsbeispiel gemäß Figur 1 vorgesehen werden. Beispielsweise kann in die Bohrung 47 ein in Längsrichtung der Mittelachse 33 der Bohrung verlagerbares Element, beispielsweise eine ringförmige Stellschraube, eingebracht werden, das mehr oder weniger weit in die Bohrung eingeschraubt ist und damit ein verstellbares Wiederlager für das Federelement 45 bildet.

Grundsätzlich ist es auch möglich, bei dem Ausführungsbeispiel nach Figur 1 einen Anschlag an dem Ende der Bohrung 47 vorzusehen, an dem das Betätigungselement 31 einführbar ist. Beispielsweise kann auch hier eine Ringschraube vorgesehen werden, die verhindert, dass das Betätigungselement 31 aus der Bohrung 47 herausfällt oder herausgedrängt wird.

## Patentansprüche

1. Verbindungsstelle mit zwei Werkzeugteilen, von denen ein erstes Werkzeugteil (3) eine Aufnahme (7) aufweist, in die das zweite Werkzeugteil einsteckbar ist, und mit einer die Werkzeugteile miteinander verspannenden Spanneinrichtung, wobei eine Haltevorrichtung (25) vorgesehen ist, die die Werkzeugteile (3,5) unabhängig von der Spanneinrichtung in zusammengesteckten Zustand zusammenhält, und wobei die Haltevorrichtung (25) mindestens ein Verriegelungselement (27) aufweist, das in einem der Werkzeugteile (3) verschiebbar gelagert ist und in einer Funktionsstellung, der Verriegelungsstellung, in das andere Werkzeugteil (5) eingreift, wenn die Werkzeugteile (3,5) zusammengesteckt sind, sodass die Werkzeugteile (3,5) zusammengehalten werden, **dadurch gekennzeichnet, dass** die Haltevorrichtung (25) ein Betätigungselement (31) aufweist, das in einem der Werkzeugteile verschiebbar gelagert ist und mit dem Verriegelungselement (27) so zusammenwirkt, dass es Zug- und/oder Druckkräfte auf das Verriegelungselement (27) ausübt, wobei das Betätigungselement (31) in eine erste Funktionsstellung verlagerbar ist, in der das Verriegelungselement (27) in dessen Verriegelungsstellung gedrängt wird, und dass das Verriegelungselement (27) bei auf das Betätigungselement (31) wirkenden Zug- oder Druckkräften in eine zweite Funktionsstellung, die Entriegelungsstellung, verlagerbar ist, in der die der Verbindungsstelle (1) zugeordneten Werkzeugteile (3,5) trennbar sind.

2. Verbindungsstelle nach Anspruch 1, **dadurch gekennzeichnet, dass** die Haltevorrichtung (25) beim Zusammenstecken der der Verbindungsstelle (1) zugeordneten Werkzeugteile (3,5) selbsttätig aktiviert wird.

3. Verbindungsstelle nach einem der vorhergehenden Ansprüche, **dadurch gekennzeichnet, dass** das Verriegelungselement (27) mit einer Vorspannkraft beaufschlagbar ist, die dieses in dessen erste Funktionsstellung, insbesondere die Verriegelungsstellung, drängt.

4. Verbindungsstelle nach einem der vorhergehenden Ansprüche, **dadurch gekennzeichnet, dass** das Betätigungselement (31) mit einer Vorspannkraft beaufschlagbar ist, die dieses in eine erste Funktionsstellung drängt.

5. Verbindungsstelle nach Anspruch 3 oder 4, **dadurch gekennzeichnet, dass** ein Federelement (45, 45a) vorgesehen ist, das die Vorspannkraft bewirkt.

6. Verbindungsstelle nach einem der vorhergehenden Ansprüche, **dadurch gekennzeichnet, dass** das Verriegelungselement (27) unter einem Winkel von ≤ 90° zur Mittelachse (11) der Verbindungsstelle (1) anordenbar ist.

7. Verbindungsstelle nach einem der vorhergehenden Ansprüche, **dadurch gekennzeichnet, dass** das Betätigungselement (31) unter einem Winkel von 0° bis 90° zur Mittelachse (11) der Verbindungsstelle (1) anordenbar ist.

8. Verbindungsstelle nach einem der vorhergehenden Ansprüche, **dadurch gekennzeichnet, dass** das Betätigungselement (31) mindestens eine Anlagefläche (39,41) oder Betätigungsfläche (73) aufweist, die unter einem Winkel zur Bewegungsrichtung des Betätigungselements (31) angeordnet ist und mit dem Verriegelungselement (27) direkt oder über eine Kopplungseinrichtung (35,35a) zusammenwirkt.

9. Verbindungsstelle nach Anspruch 8, **dadurch gekennzeichnet, dass** das Betätigungselement (31) zwei Anlageflächen (39,41) aufweist, die unter einem Winkel zur Bewegungsrichtung des Betätigungselements angeordnet sind und mit dem Verriegelungselement (27) zusammenwirken.

10. Verbindungsstelle nach Anspruch 9, **dadurch gekennzeichnet, dass** die Anlageflächen (39,41) im Wesentlichen parallel zueinander verlaufen.

11. Verbindungsstelle nach einem der vorhergehenden Ansprüche, **dadurch gekennzeichnet, dass** das Verriegelungselement (27) mindestens eine Betätigungsfläche (77) aufweist, die unter einem Winkel zur Bewegungsrichtung des Verriegelungselements (27) angeordnet ist und mit dem Betätigungselement direkt oder über eine Kopplungseinrichtung (35,35a) zusammenwirkt.

12. Verbindungsstelle nach Anspruch 11, **dadurch gekennzeichnet, dass** die Kopplungseinrichtung (35a) mindestens eine Kugel (71) aufweist.

13. Verbindungsstelle nach einem der vorhergehenden Ansprüche, **dadurch gekennzeichnet, dass** die Haltevorrichtung (25) mindestens ein Einstellelement aufweist, das als Anschlag für das Verriegelungselement (27) und/oder das Betätigungselement (31) dient und/oder zur Einstellung der auf das Verriegelungselement (27) und/oder Betätigungselement (31) wirkenden Vorspannkraft dient.

14. Verbindungsstelle nach einem der vorhergehenden Ansprüche, **dadurch gekennzeichnet, dass** das Verriegelungselement (27) in eine als Loch, Nut oder dergleichen ausgebildete Ausnehmung (29) des anderen Werkzeugteils eingreift.

15. Verbindungsstelle nach einem der vorhergehenden Ansprüche, **dadurch gekennzeichnet, dass** das Verriegelungselement (27) eine Anlaufschräge (51) aufweist.

16. Verbindungsstelle nach einem der vorhergehenden Ansprüche, **gekennzeichnet durch** eine Verdrehsicherung für das Verriegelungselement (27) und /oder das Betätigungselement (31).

17. Verbindungsstelle nach einem der vorhergehenden Ansprüche, **dadurch gekennzeichnet, dass** die Aufnahme des ersten Werkzeugteils (3) eine Ausnehmung (7) aufweist, die das zweite Werkzeugteil (5) zumindest bereichsweise aufnimmt.

18. Verbindungsstelle nach einem der vorhergehenden Ansprüche, **dadurch gekennzeichnet, dass** die Ausnehmung (7) zylindrisch oder konisch ist.

19. Verbindungsstelle nach Anspruch 17, **dadurch gekennzeichnet, dass** die Ausnehmung polygonförmig ist.

20. Verbindungsstelle nach einem der vorhergehenden Ansprüche, **dadurch gekennzeichnet, dass** der in die Ausnehmung (7) einsteckbare Bereich des zweiten Werkzeugteils (5) als Schaft (9) ausgebildet ist, dessen äußere Kontur komplementär zur Innenkontur der Ausnehmung (7) im ersten Werkzeugteil (3) ausgebildet ist.

## Claims

1. Connecting point comprising two tool parts, of which a first tool part (3) has a receptacle (7) into which the second tool part may be inserted, and a clamping device which clamps the tool parts together, wherein a retaining device (25) is provided which, independently of the clamping device, holds the tool parts (3, 5) together in the joined state, and wherein the retaining device (25) has at least one locking element (27) which is displaceably supported in one of the tool parts (3), and in a functional position, the locked position, engages in the other tool part (5) when the tool parts (3, 5) are joined, thereby holding the tool parts (3, 5) together, **characterized in that** the retaining device (25) has an actuating element (31) which is displaceably supported in one of the tool parts and which cooperates with the locking element (27) in such a way that the actuating element (31) exerts tensile and/or pressure forces onto the locking element (27), the actuating element (31) being displaceable into a first functional position in which the locking element (27) is urged into its locked position, and that the locking element (27), as a result of tensile or pressure forces acting on the actuating element (31), can be displaced into a second functional position, the unlocked position, in which the tool parts (3, 5) associated with the connecting point (1) may be separated.

2. Connecting point according to claim 1, **characterized in that** the retaining device (25) is automatically actuated when the tool parts (3, 5) associated with the connecting point (1) are joined.

3. Connecting point according to one of the preceding claims, **characterized in that** the locking element (27) may be acted upon by a pretensioning force which urges the locking element into its first functional position, in particular the locked position.

4. Connecting point according to one of the preceding claims, **characterized in that** the actuating element (31) may be acted upon by a pretensioning force which urges the actuating element into a first functional position.

5. Connecting point according to claim 3 or 4, **characterized in that** a spring element (45, 45a) is provided which produces the pretensioning force.

6. Connecting point according to one of the preceding claims, **characterized in that** the locking element (27) may be situated at an angle of ≤ 90° relative to the center axis (11) of the connecting point (1).

7. Connecting point according to one of the preceding claims, **characterized in that** the actuating element (31) may be situated at an angle of 0° to 90° relative to the center axis (11) of the connecting point (1).

8. Connecting point according to one of the preceding claims, **characterized in that** the actuating element (31) has at least one support surface (39, 41) or actuating surface (73) which is situated at an angle relative to the direction of motion of the actuating element (31) and cooperates with the locking element (27), either directly or via a coupling device (35, 35a).

9. Connecting point according to claim 8, **characterized in that** the actuating element (31) has two support surfaces (39, 41) which are situated at an angle relative to the direction of motion of the actuating element and cooperate with the locking element (27).

10. Connecting point according to claim 9, **characterized in that** the support surfaces (39, 41) extend essentially parallel to one another.

11. Connecting point according to one of the preceding claims, **characterized in that** the locking element (27) has at least one actuating surface (77) which is situated at an angle relative to the direction of motion of the locking element (27) and cooperates with the actuating element, either directly or via a coupling device (35, 35a).

12. Connecting point according to claim 11, **characterized in that** the coupling device (35a) has at least one ball (71).

13. Connecting point according to one of the preceding claims, **characterized in that** the retaining device (25) has at least one adjustment element which acts as a stop for the locking element (27) and/or actuating element (31) and/or serves for adjusting the pretensioning force acting on the locking element (27) and/or actuating element (31).

14. Connecting point according to one of the preceding claims, **characterized in that** the locking element (27) engages in a recess (29) designed as a hole, groove, or the like in the other tool part.

15. Connecting point according to one of the preceding claims, **characterized in that** the locking element (27) has a stop bevel (51).

16. Connecting point according to one of the preceding claims, **characterized by** prevention of rotation of the locking element (27) and/or actuating element (31).

17. Connecting point according to one of the preceding claims, **characterized in that** the receptacle in the first tool part (3) has a recess (7) which accommodates the second tool part (5), at least in places.

18. Connecting point according to one of the preceding claims, **characterized in that** the recess (7) is cylindrical or conical.

19. Connecting point according to claim 17, **characterized in that** the recess is polygonal.

20. Connecting point according to one of the preceding claims, **characterized in that** the region of the second tool part (5) which is insertable in the recess (7) is designed as a shaft (9), the outer contour of which has a shape that is complementary to the inner contour of the recess (7) in the first tool part (3).

## Revendications

1. Jonction avec deux parties d'outil, parmi lesquelles une première partie d'outil (3) présente un logement (7) dans lequel la seconde partie d'outil peut être enfichée, et avec un dispositif de serrage serrant ensemble les parties d'outil, un dispositif de maintien (25) étant prévu, lequel maintient les parties d'outil (3, 5) indépendamment du dispositif de serrage dans l'état assemblé, et le dispositif de maintien (25) présentant au moins un élément de verrouillage (27) qui est logé de manière coulissante dans une des parties d'outil (3) et s'engrène dans une position de fonctionnement, la position de verrouillage, dans l'autre partie d'outil (5) lorsque les parties d'outil (3, 5) sont assemblées de sorte que les parties d'outil (3, 5) sont maintenues, **caractérisée en ce que** le dispositif de maintien (25) présente un élément d'actionnement (31) qui est logé de manière coulissante dans une des parties d'outil et coopère avec l'élément de verrouillage (27) de sorte qu'il exerce des forces de traction et/ou de pression sur l'élément de verrouillage (27), l'élément d'actionnement (31) pouvant être déplacée dans une première position de fonctionnement dans laquelle l'élément de verrouillage (27) est poussée dans sa position de verrouillage, et que l'élément de verrouillage (27) peut être déplacé dans une seconde position de fonctionnement, la position de déverrouillage, en cas de forces de traction ou de pression agissant sur l'élément d'actionnement (31), dans laquelle les parties d'outil (3, 5) associées à la jonction (1) peuvent être séparées.

2. Jonction selon la revendication 1, **caractérisée en ce que** le dispositif de maintien (25) est activé automatiquement lors de l'assemblage des parties d'outil (3, 5) associées à la jonction (1).

3. Jonction selon l'une quelconque des revendications précédentes, **caractérisée en ce que** l'élément de verrouillage (27) peut être sollicité avec une force de précontrainte qui le pousse dans sa première position de fonctionnement, notamment la position de verrouillage.

4. Jonction selon l'une quelconque des revendications précédentes, **caractérisée en ce que** l'élément d'actionnement (31) peut être sollicité avec une force de précontrainte qui le pousse dans une première position de fonctionnement.

5. Jonction selon la revendication 3 ou 4, **caractérisée en ce qu'**un élément élastique (45, 45a) qui provoque la force de précontrainte est prévu.

6. Jonction selon l'une quelconque des revendications précédentes, **caractérisée en ce que** l'élément de verrouillage (27) peut être disposé à un angle ≤ 90° par rapport à l'axe médian (11) de la jonction (1).

7. Jonction selon l'une quelconque des revendications précédentes, **caractérisée en ce que** l'élément d'actionnement (31) peut être disposé à un angle de 0° à 90° par rapport à l'axe médian (11) de la jonction (1).

8. Jonction selon l'une quelconque des revendications précédentes, **caractérisée en ce que** l'élément d'actionnement (31) présente au moins une surface d'appui (39, 41) ou surface d'actionnement (73) qui est disposée à un angle par rapport à la direction de mouvement de l'élément d'actionnement (31) et coopère avec l'élément de verrouillage (27) directement ou par le biais d'un dispositif d'accouplement (35, 35a).

9. Jonction selon la revendication 8, **caractérisée en ce que** l'élément d'actionnement (31) présente deux surfaces d'appui (39, 41) qui sont disposées à un angle par rapport à la direction de mouvement de l'élément d'actionnement et coopèrent avec l'élément de verrouillage (27).

10. Jonction selon la revendication 9, **caractérisée en ce que** les surfaces d'appui (39, 41) s'étendent essentiellement parallèlement l'une à l'autre.

11. Jonction selon l'une quelconque des revendications précédentes, **caractérisée en ce que** l'élément de verrouillage (27) présente au moins une surface d'actionnement (77) qui est disposée à un angle par rapport à la direction de mouvement de l'élément de verrouillage (27) et coopère avec l'élément d'actionnement directement ou par le biais d'un dispositif d'accouplement (35, 35a).

12. Jonction selon la revendication 11, **caractérisée en ce que** le dispositif d'accouplement (35a) présente au moins une boule (71).

13. Jonction selon l'une quelconque des revendications précédentes, **caractérisée en ce que** le dispositif de maintien (25) présente au moins un élément de réglage qui sert de butée pour l'élément de verrouillage (27) et/ou l'élément d'actionnement (31) et/ou sert au réglage de la force de précontrainte agissant sur l'élément de verrouillage (27) et/ou l'élément d'actionnement (31).

14. Jonction selon l'une quelconque des revendications précédentes, **caractérisée en ce que** l'élément de verrouillage (27) s'engrène dans un évidement (29) réalisé en tant que trou, rainure ou similaire de l'autre partie d'outil.

15. Jonction selon l'une quelconque des revendications précédentes, **caractérisée en ce que** l'élément de verrouillage (27) présente un biseau de démarrage (51).

16. Jonction selon l'une quelconque des revendications précédentes, **caractérisée par** une sécurité de torsion pour l'élément de verrouillage (27) et/ou l'élément d'actionnement (31).

17. Jonction selon l'une quelconque des revendications précédentes, **caractérisée en ce que** le logement de la première partie d'outil (3) présente un évidement (7) qui reçoit au moins par région la seconde partie d'outil (5).

18. Jonction selon l'une quelconque des revendications précédentes, **caractérisée en ce que** l'évidement (7) est cylindrique ou conique.

19. Jonction selon la revendication 17, **caractérisée en ce que** l'évidement est de forme polygonale.

20. Jonction selon l'une quelconque des revendications précédentes, **caractérisée en ce que** la région de la seconde partie d'outil (5) enfichable dans l'évidement (7) est réalisée en tant que tige (9) dont le contour extérieur est réalisé de manière complémentaire au contour intérieur de l'évidement (7) dans la première partie d'outil (3).
